(19) Europäisches Patentamt
European Patent Office
Office européen des brevets

(11) **EP 2 871 908 B1**

(12) **EUROPEAN PATENT SPECIFICATION**

(45) Date of publication and mention
of the grant of the patent:
**19.06.2019 Bulletin 2019/25**

(51) Int Cl.:
***H04W 84/18*** *(2009.01)*     ***H04W 40/12*** *(2009.01)*
***H04W 40/24*** *(2009.01)*

(21) Application number: **14181701.5**

(22) Date of filing: **21.08.2014**

(54) **RELAY APPARATUS AND METHOD OF SELECTING RELAY NODE BASED ON LEARNING IN WIRELESS NETWORK**

RELAISVORRICHTUNG UND VERFAHREN ZUR AUSWAHL EINES RELAISKNOTENS AUF BASIS VON LERNEN IN EINEM DRAHTLOSEN NETZWERK

APPAREIL DE RELAIS ET PROCÉDÉ DE SÉLECTION DE NOEUD RELAIS BASÉ SUR L'APPRENTISSAGE DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2013 KR 20130114301**

(43) Date of publication of application:
**13.05.2015 Bulletin 2015/20**

(73) Proprietor: **Samsung Electronics Co., Ltd. Gyeonggi-do 443-742 (KR)**

(72) Inventors:
• **Kim, Tae Hong**
**443-742 Gyeonggi-do (KR)**
• **Seo, Seog Chung**
**443-742 Gyeonggi-do (KR)**
• **Jang, Myeong Wuk**
**443-742 Gyeonggi-do (KR)**
• **Hong, Seong Ik**
**443-742 Gyeonggi-do (KR)**

(74) Representative: **Grünecker Patent- und Rechtsanwälte PartG mbB Leopoldstraße 4 80802 München (DE)**

(56) References cited:
**WO-A1-2005/062553     WO-A1-2011/083389**
**US-A1- 2007 206 547     US-A1- 2012 134 347**

**Description**

1. Field

The following description relates to an apparatus and method for relaying data in a wireless network.

2. Description of Related Art

To ensure stable communication, application technologies for sharing content among users using a whole network or a part of the network, may employ a unicast-based terminal-to-terminal communication scheme. Because content is required to be transmitted sequentially in an one-to-one communication scheme, the communication efficiency of such a communication scheme may be reduced as a number of terminals sharing content increases.

To prevent the communication efficiency of a communication scheme from being reduced due to an increase in the number of terminals, a broadcast-based communication scheme may be utilized in lieu of a unicast-based communication scheme. To cover a multi-hop network, the broadcast-based communication scheme may require the use of a relay node configured to transfer or relay content from an owner of the content. For example, such a relay node may be configured to transfer or relay content from a source node, to a specific target node or nodes, or all nodes in the network.

WO 2011/083389 A1 discloses a method for defining broadcast routers in a wireless multihop mesh network of nodes comprising a plurality of routing nodes potentially able to repeat a broadcast message, the method comprising: determining for each routing node the number of neighboring routing nodes and the quality of each link between the routing node and the neighboring routing nodes; selecting a subset of the plurality of routing nodes comprising a reduced number of routing nodes so that only routing nodes belonging to the subset are allowed to perform selected operations.

WO 2005/062553 A1 discloses a method for efficient routing in a multiple hop wireless communication network. The routing method comprise the steps of providing link status information by acquiring link status quality between nodes in the network, updating a routing element with said link status information, determining an appropriate route according to said link status information with respect to traffic content, and routing traffic according to said determined appropriate route.

US 2007/206547 A1 discloses methods, apparatuses and systems directed to facilitating load balancing and bandwidth allocation in wireless mesh networks. Routing nodes implement a contention-based media access mechanism and self-allocate bandwidth within a wireless mesh network by dynamically modifying contention-based transmission control parameters. The routing nodes determine a hop count and adjust contention parameters based on the hop count.

## SUMMARY

It is therefore the object of the present invention to provide an improved method for selecting a relay apparatus as a relay node, a corresponding relay apparatus, and a corresponding computer-readable medium having instructions thereon for selecting a relay apparatus as a relay node.

This object is solved by the subject matter of the independent claims.

Preferred embodiments are defined by the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method of selecting a relay node by a relay apparatus includes receiving packet information from a predecessor node and a successor node, and determining whether the relay apparatus is to be selected as a relay node to relay a data packet, based on relay quality indicator (RQI) information computed based on the packet information.

The packet information may indicate whether a packet is received.

The receiving may include receiving a packet associated with the predecessor node from the predecessor node, and reflecting packet information on the packet associated with the predecessor node on the computed RQI information, in response to the packet associated with the predecessor node corresponding to a data packet received first from the predecessor node in a current sequence.

The receiving may include receiving a negative acknowledgement (NACK) packet from a successor node in which data loss occurs, and reflecting the NACK packet on the computed RQI information in response to the NACK packet corresponding to a data packet relayed by the relay apparatus in a previous sequence.

The reflecting of the NACK packet on the computed RQI information may include adding a weight to a NACK packet received during a last sequence of a predetermined range and reflecting the weighted NACK packet on the computed RQI information.

The method may further include, in response to the relay apparatus determining to relay a packet, reflecting a number of packets to be relayed by the relay apparatus on the computed RQI information.

The determining may include determining whether the relay apparatus is to relay a packet, by comparing the computed RQI information with RQI information included in the data packet.

The determining may include determining whether the relay apparatus is to relay a packet, by comparing the computed RQI information with RQI history information comprising RQI information of a data packet received in a previous sequence.

The determining may further include counting nodes that relay a packet in a current sequence, and updating RQI history information of the relay apparatus based on the counting.

The RQI information may be determined based on at least one of a probability that a packet is received from the predecessor node and a probability that a packet is transmitted to the successor node.

The method may further include in response to there being no node relaying a packet in a previous sequence, determining whether the relay apparatus is to relay a packet, by comparing the computed RQI information with RQI history information of the relay apparatus.

The method may further include in response to there being no node relaying a packet in a previous sequence, adjusting RQI history information of the relay apparatus based on an adjustment value and the computed RQI information, the RQI history information being used to determine a node that is to relay a packet in a next sequence.

In another general aspect, a relay apparatus for relaying a packet includes a receiver configured to receive packet information from a predecessor node and a successor node, and a processor configured to determine whether the relay apparatus is to be selected as a relay node to relay a data packet, based on relay quality indicator (RQI) information computed based on the packet information.

The packet information may indicate whether a packet is received.

The receiver may receive a packet associated with the predecessor node from the predecessor node, and in response to the packet associated with the predecessor node corresponding to a data packet received first from the predecessor node in a current sequence, the processor may reflect packet information on the packet associated with the predecessor node on the computed RQI information.

The packet information on the packet associated with the predecessor node may include at least one of a total number of packets transmitted by the predecessor node and a total number of packets received by the relay apparatus from the predecessor node.

The receiver may receive a negative acknowledgement (NACK) packet from a successor node in which data loss occurs, and in response to the NACK packet corresponding to a data packet relayed by the relay apparatus in a previous sequence, the processor may reflect the NACK packet on the computed RQI information.

The processor may add a weight to a NACK packet received during a last sequence of a predetermined range, and may reflect the weighted NACK packet on the computed RQI information.

When the relay apparatus determines to relay a packet, the processor may reflect a number of packets to be relayed by the relay apparatus on the computed RQI information.

The processor may determine whether the relay apparatus is to relay a packet, by comparing the computed RQI information with RQI information included in the data packet.

The processor may determine whether the relay apparatus is to relay a packet, by comparing the computed RQI information with RQI history information including RQI information of a data packet received in a previous sequence.

The processor may count nodes that relay a packet in a current sequence, and may update RQI history information of the relay apparatus based on the counting.

The RQI information may be determined by the processor based on at least one of a probability that a packet is received from the predecessor node and a probability that a packet is transmitted to the successor node.

In response to there being no node relaying a packet in a previous sequence, the processor may determine whether the relay apparatus is to relay a packet, by comparing the computed RQI information with RQI history information of the relay apparatus.

In response to there being no node relaying a packet in a previous sequence, the processor may adjust RQI history information of the relay apparatus based on an adjustment value and the computed RQI information, the RQI history information being used to determine a node that is to relay a packet in a next sequence.

In another general aspect, a method of selecting a relay node by a relay apparatus includes determining whether the relay apparatus and at least one of a plurality of relay candidate nodes relay a data packet in a previous sequence, and determining whether the relay apparatus is to relay a data packet in a current sequence, based on a result of the determining and relay quality indicator (RQI) information of the relay apparatus.

The determining whether the relay apparatus is to relay the data packet in the current sequence may include, when the relay apparatus successfully relays a data packet in the previous sequence, relaying a data packet in the current sequence.

The method may further include, in response to the data packet being relayed in the previous sequence, updating RQI history information of the relay apparatus.

The determining whether the relay apparatus is to relay the data packet in the current sequence may include, in response to the data packet not being relayed in the previous sequence, and in response to the RQI information of the relay apparatus being equal to or greater than RQI history information, relaying the data packet.

The determining whether the relay apparatus is to relay the data packet in the current sequence may include adjusting RQI history information of the relay apparatus when the data packet is not relayed in the previous sequence, and determining whether the relay apparatus is to relay the data packet in the current sequence, based on the RQI information of the relay apparatus and the adjusted RQI history information.

In another general aspect, a method of calculating a relay quality indicator (RQI) for a relay node includes determining a receiving history of predecessors of the relay node, determining a receiving history of successors of the relay node when the node performs relaying, and calculating a RQI value based on the receiving history of predecessors of the relay node and receiving history of successors of the relay node when the node performs relaying.

The calculating may include calculating the RQI value based on a weighted product of the receiving history of predecessors of the relay node and receiving history of successors of the relay node when the node performs relaying.

The determining a receiving history of predecessors of the relay node may include dividing a total number of received packets by a total number of transmitted packets.

The determining a receiving history of successors of the relay node when the node performs relaying may include dividing the difference of a total number of relayed packets and a total number of NACK packets by the total number of relayed packets

Other features and aspects will be apparent from the following detailed description, the drawings, and the claims.

## BRIEF DESCRIPTION OF THE DRAWINGS

> FIG. 1 is a diagram illustrating an example of a wireless network topology.
> FIG. 2 is a diagram illustrating an example of an RQI of a node.
> FIG. 3 is a diagram illustrating an example of a structure of a data packet.
> FIG. 4 is a diagram illustrating an example of a structure of a negative acknowledgement (NACK) packet.
> FIG. 5 is a flowchart illustrating an example of a method of selecting a relay node.
> FIG. 6 is a diagram illustrating an example of a relay apparatus.
> FIGS. 7A and 7B are flowcharts illustrating an example of a method of selecting a relay node based on RQI information.
> FIG. 8 is a flowchart illustrating an example of an operation of reflecting a NACK packet.
> FIG. 9 is a flowchart illustrating another example of a method of selecting a relay node.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

## DETAILED DESCRIPTION

The following detailed description is provided to assist the reader in gaining a comprehensive understanding of the methods, apparatuses, and/or systems described herein. However, various changes, modifications, and equivalents of the systems, apparatuses and/or methods described herein will be apparent to one of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

Applicants note that the term "reflect" has been used throughout the Specification to denote that a piece of information "reflected" on a value modifies that value to take into account the piece of information "reflected" onto it.

Recently, technologies used by a user to configure a wireless network and to share content with a whole network or a plurality of other users in the network may be used. Such technologies include, for example, Group Play, Share Music, and the like. The above technologies may utilize a wireless network as all or part of the network used to distribute such content. For example the wireless network is a wireless local area network (WLAN), a Wi-Fi Direct network, or a similar network. Such a network allows easy configuration and management of the wireless network to facilitate content distribution.

In another example, content sharing technologies is utilized in a business-to-business (B2B) field. For example B2B content sharing is used to facilitate an electronic meeting, a smart campus, and similar applications. As a number of users participating in such a network increases and a network scale of such a content sharing network increases, a wireless ad hoc network enabling supporting multi-hop communication is one approach to provide sufficient network performance.

In a scheme for selecting a relay node in a typical wireless ad hoc network, topology information, and network connectivity information is collected. For example, the topology information and network connectivity information includes information such as a two-hop neighboring node, a wireless link state, and similar information related to aspects of the network. Such information is used to select an optimum relay node to cover a whole network, based on such information, collected in advance.

In the above scheme, to acquire advance information, for example the network connectivity information, required to select a relay node, control packets are exchanged. Accordingly, additional traffic and time are required for such information acquisition. Additionally, network connectivity information, for example a wireless link state, and similar aspects of network connectivity, changes over time. Because of such changes, advance information may be periodically collected and updated so that a network employing the above scheme adapts dynamically to any environmental changes, such as changes to the network configuration.

Hereinafter, various examples are described in detail with reference to the accompanying drawings. In the following description, a relay apparatus denotes an apparatus configured to perform a scheme of selecting a relay node. Such a relay apparatus is a piece of hardware with a corresponding structure that allows it to perform a scheme of selecting a relay node. A relay candidate node denotes a node included in a relay region. Additionally, a relay node denotes a node determined to perform relaying in a current sequence among relay candidate nodes.

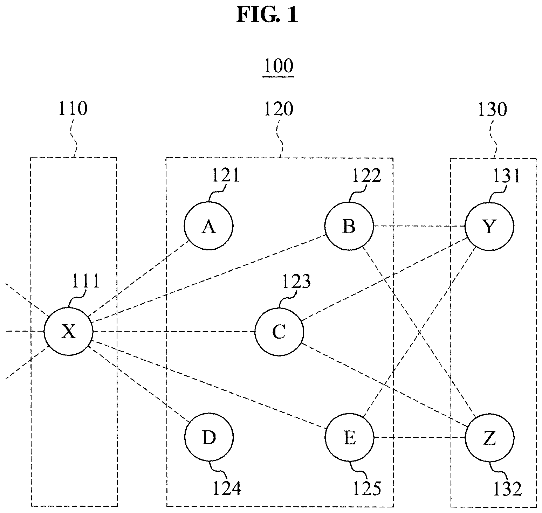

FIG. 1 illustrates an example of a wireless network topology. In a wireless network, such as for example a wireless ad hoc network, a packet transmitted by a predetermined source is potentially propagated over the whole network through a multi-hop broadcast approach. For example, a portion of nodes receiving the packet may iterate relaying of a packet. By iterating relaying of the packet, the packet is relayed from node to node until all of the nodes in the network have received the packet.

In the example of FIG. 1, a predecessor node X 111 is included in a predecessor region 110, relay candidate nodes A 121, B 122, C 123, D 124, and E 125 are included in a relay region 120, and successor nodes Y 131 and Z 132 are included in a successor region 130. The relay region 120 potentially includes a plurality of constituent relay regions. For example, such constituent relay regions include a first relay region, a second region, and an $n^{th}$ relay region.

In an example in which the successor nodes Y 131 and Z 132 relay a data packet received from a relay candidate node included in the first relay region, the successor nodes Y 131 and Z 132 potentially function as relay candidate nodes, and the successor region 130 including the successor nodes Y 131 and Z 132 correspond to the second relay region.

In another example, the successor nodes Y 131 and Z 132 receive a data packet directly from the predecessor node X 111. In this example, Y 131 and Z 132 relay the received data packet, thereby functioning as relay candidate nodes. Each of the predecessor region 110, the relay region 120, and the successor region 130 may be appropriately determined, based on a communication scheme, a distribution of nodes, a number of nodes, a communication environment of a wireless network, and other parameters of the network that indicate how to allocate the nodes to each of the predecessor region 110, the relay region 120, and the successor region 130.

The above-described multi-hop broadcast techniques are potentially applied to the example wireless network topology of FIG. 1. For example, when a data packet is received from the predecessor node X 111 located in the predecessor region 110, one or more of the relay candidate nodes A 121, B 122, C 123, D 124, and E 125, that are included in the relay region 120, relays a packet, so that the packet is propagated to the successor nodes Y 131 and Z 132, that are included in the successor region 130. Because the relay candidate nodes A 121 and D 124 are not linked in the example of FIG. 1, and as shown do not include network connectivity, to the successor nodes Y 131 and Z 132, the successor nodes Y 131 and Z 132 do not receive packets from the relay candidate nodes A 121 and D 124, despite the relay candidate nodes A 121 and D 124 relaying the received packets receive from X 111. When at least one of the relay candidate nodes B 122, C 123, and E 125 that have network connectivity to the successor nodes Y 131 and Z 132 relays a packet received from X 111, the packet is propagated to the successor nodes Y 131 and Z 132. Hence, in order for a packet to be relayed from the predecessor region 110 to the successor region 130, the network should be configured so that in the relay region, there is at least one node that has network connectivity that is sufficient to receive the packet from the predecessor region 110 and deliver it to the successor region 130.

In an example of a method of selecting a relay node, performed by the relay apparatus, content is broadcast from a single content owner, for example a source node, to a whole network or a plurality of users in a wireless network environment. Such broadcasting allows efficient, quick and reliable transfer of the content to terminals located at a distance from the source node. The method is applicable to transmission of a large file, or real-time streaming to transmit a single content divided into at least one packet using the consecutive transmission of the at least one packet.

Each relay candidate node is able to learn its own performance state as a relay node every time a packet is transmitted, adapting its performance state at runtime by a learning process. When each relay candidate node performs such learning in order to have an optimum performance state, each relay candidate node is selected as a relay node, as appropriate. Because acquisition of advance information is not a part of this approach, it is possible to remove an overhead caused by acquiring the advance information. Hence, this approach makes it possible to quickly cope with a dynamic environmental change by using a learning approach to determine how to broadcast content rather that requiring the overhead involved with the advance information.

As shown with respect to the example of FIG. 1, the relay apparatus supports multi-hop broadcasting with a high reliability, while also operating at a high speed, in a wireless ad hoc network.

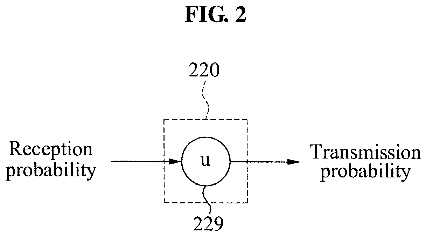

FIG. 2 illustrates a relay quality indicator of a node u 229. Herein, the relay quality indicator is referred to as an "RQI." In FIG. 2, the RQI is used to select an optimum relay node to relay a packet from among relay candidate nodes that receive packets from a predecessor node, for example, the relay candidate nodes A 121, B 122, C 123, D 124, and E 125 of FIG. 1.

A value of RQI(u) indicating the RQI of the node u 229 is obtained, for example, by Equation 1 below. However, Equation 1 is only one example of a way to calculate the RQI(u) value, and other techniques and approaches for calculating the RQI metric are used in other examples. The node u 229 may be, for example, one of relay candidate nodes included in a relay region 220, or another relay candidate node included in relay apparatus that is configured to relay a packet and to perform a method of selecting a relay node.

## Equation 1

$RQI(u)$

$= \alpha \text{ (Receiving history of predecessors) } x \text{ } \beta(\text{Receiving history of successor when u performs relaying})$

$= \alpha \left( \dfrac{\text{Total number of packets received from predecessors}}{\text{Total number of packets transmitted by predecessors}} \right) \times$

$\beta \left( \dfrac{\text{Total number of packets relayed by u} - \text{Total number of NACK packets received by u}}{\text{Total number of packets relayed by u}} \right)$

In Equation 1, $\alpha$ denotes a setting value corresponding to a receiving history of the node u 229 from a predecessor node, and $\beta$ denotes a setting value corresponding to a receiving history of a successor node when the node u 229 performs relaying. In an example, $\alpha$ and $\beta$ are set by a user. However, other examples use automatic processes to suggest values of $\alpha$ and $\beta$ or to otherwise derive values of $\alpha$ and $\beta$. For example, various heuristics are potentially used to derive or suggest possible values of $\alpha$ and $\beta$.

As illustrated in FIG. 2, a metric corresponding to performance of the node u 229 as a relay node is potentially quantified by a probability that the node u 229 receives a packet from a predecessor node, and a probability that the successor node receives a packet when the node u 229 relays the packet. Hence, such a metric of a performance of the node u as a relay node is represented as an RQI, which is based on Equation 1, as an example. Hence, RQI information includes, for example, an RQI value based on Equation 1 as a metric of the node's performance as a relay node.

To learn RQI information, in the example illustrated in FIG. 2, the node u 229 uses information related to a receiving history of the node u 229 from a predecessor node, and information related to a receiving history of a successor node when the node u 229 performs relaying. The information on the receiving history of the node u 229 from the predecessor node is acquired, for example, by storing a history of a number of packets received by the node u 229 and a total number of packets transmitted by a source node to a current sequence of transmitted packets, based on sequence number information in the packet or packets being transmitted. In the following description, the information on the receiving history is represented by way of example as packet information.

Additionally, to learn the information related to the receiving history of the successor node, a total number of packets relayed by the node u 229, and a number of negative acknowledgement (NACK) packets indicating that the successor node fails to receive a packet are part of the information used to derive the receiving history. For example, the total number of packets relayed by the node u 229 is acquired by recording in a history every sequence in which the node u 229 relays a packet. Hence, by recording each relaying event, a tally of relaying events is available that corresponds to the total number of packets relayed by the node u 229. When at least one of the successor nodes recognizes a data loss in a previous sequence, for example, when a packet is transmitted in the previous sequence, but a successor node fails to receive the packet, the successor node provides, as a feedback, a NACK packet and packet loss information to the node u 229. By recording the NACK packets and packet loss information received as feedback, the node u 229 is also able to learn NACK packet information, by gathering information received from the successor node.

In this example, a total size of a buffer used to analyze each receiving history in the node u 229 is restricted by designating a total number of packets used in a history based on a sequence number that is finally received from the predecessor node. In an example in which an item of predetermined content is transmitted through 1,000 packets, and in which the node u 229 receives a packet corresponding to a 900$^{th}$ sequence, when a buffer is designed to store a packet history corresponding to 100 sequences, a packet history from a 800$^{th}$ sequence to the 900$^{th}$ sequence is stored in the buffer.

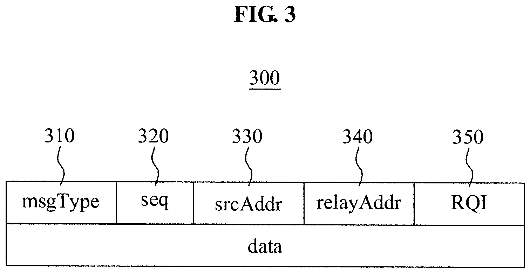

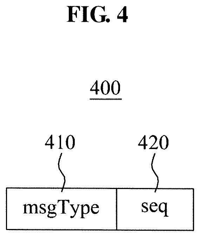

FIG. 3 illustrates a structure of a data packet 300. FIG. 4 illustrates a structure of a NACK packet 400.

In a wireless network environment, when an individual node, for example a node u, receives the data packet 300 or relays a packet, or receives, from a successor node, the NACK packet 400 indicating a failure of receiving of a relayed packet, an RQI value is updated. Various aspects of calculating an RQI value and considering such information by a node u are discussed above. A packet used to perform a method of selecting a relay node potentially includes, for example, the data packet 300 and the NACK packet 400. A type of a packet is determined based on msgType fields 310 and 410 of the packet, indicating whether a packet corresponds to the structure of a data packet 300 or the structure of a NACK packet 400.

The data packet 300 and the NACK packet 400 may include seq fields 320 and 420 used to manage a history of a packet that is transmitted and received, respectively. That is, a data packet 300 stores information for a transmitted packet, while a NACK packet 400 stores information about a received packet. For example, predetermined content may be transferred for each packet to each node in a wireless network, and each packet may include a unique sequence number based on a transmission order, in order to facilitate reassembling the transmitted packets into the predetermined content after they are all received. The seq fields 320 and 420 include, for example, a unique sequence number of each packet.

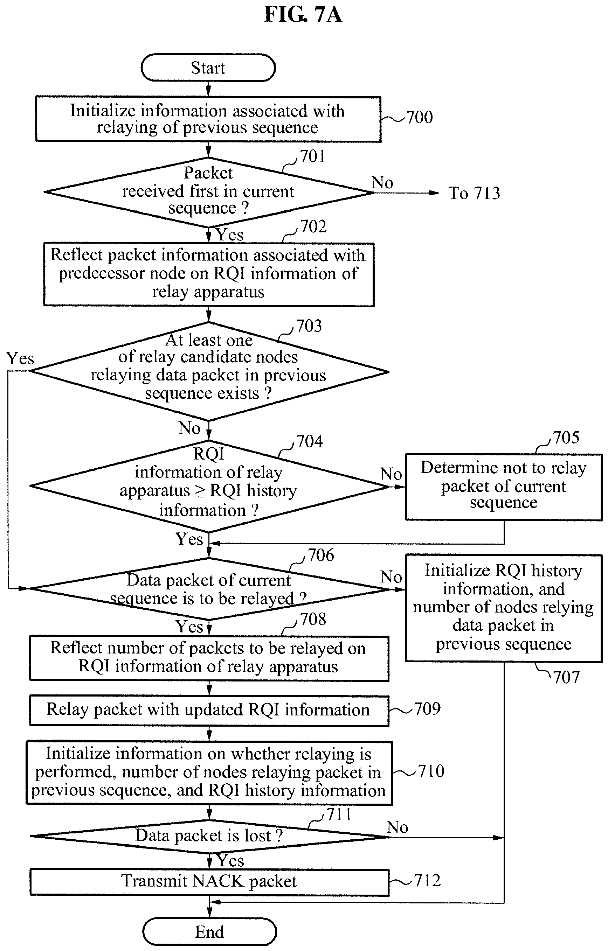

The data packet 300 includes a srcAddr field 330, a relayAddr field 340, and an RQI field 350, as illustrated in FIG. 3. In the example of FIG. 3, the srcAddr field 330 includes an address of a source node that starts transmission of the data packet 300. The relayAddr field 340 includes an address of a node that relays a packet. For example, when the data packet 300 is received, the relay apparatus determines whether the data packet 300 is received first or has the same sequence number as an already received data packet, based on considering a combination of the srcAddr field 330 and the seq field 320. Similarly, whether a received data packet corresponds to a packet received first in a current sequence is determined in 701 of FIG. 7A, which is discussed further, below.

An RQI value included in the RQI field 350 may be represented by "RQI(p)." In an example, a node u changes the RQI value RQI(p) of the data packet 300 to an RQI value RQI(u) in order to update the RQI value, and relays the data packet 300. The RQI value RQI(p) includes, in this example, an RQI value of a node that relays the data packet 300 of the current sequence. Hence, the RQI field 350 is used by a relay apparatus to individually learn an RQI of that relay apparatus in the wireless network environment. For example, the RQI field is used to determine whether the relay apparatus is used as an optimal relay node in the wireless network environment. For example, each relay candidate node determines whether each relay candidate node is potentially used as a better relay node, by comparing RQI fields of data packets relayed by the other relay candidate nodes. Such comparison of learned RQI fields helps the network determine optimal relaying paths.

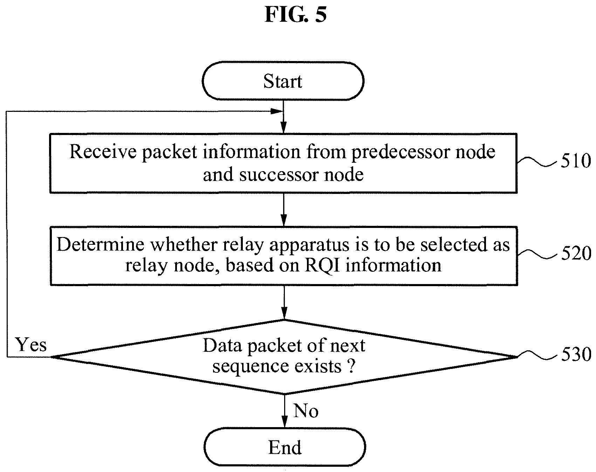

FIG. 5 illustrates an example of a method of selecting a relay node. The method of FIG. 5 is applicable to any application technologies employing a one-to-many content distribution technique in a wireless ad hoc network environment. Such application technologies include, for example, real-time streaming of audio and/or video, propagation and sharing of images, moving images, or files, and the like. However, these types are not meant to be limiting, and the method of FIG. 5 is applicable for any types of content or other data that are to be shared through a wireless ad hoc network environment.

In 510, the method receives packet information from a predecessor node and a successor node. For example, a receiver of a relay apparatus receives packet information from a predecessor node and a successor node. Packet information received from the predecessor node includes, for example, a data packet, a total number of packets transmitted by the predecessor node, and a total number of packets received by the relay apparatus from the predecessor node. Additionally, packet information received from the successor node includes, for example, a NACK packet transmitted when the successor node fails to receive a packet.

In 520, the method determines whether the relay apparatus is to be selected as a relay node to relay a data packet, based on RQI information. For example, a processor of the relay apparatus determines whether the relay apparatus is to be selected as a relay node to relay a data packet, based on RQI information. The processor computes RQI information, for example an RQI value, based on the packet information. For example, the processor uses Equation 1 that is described above. In an example in which the relay apparatus receives a data packet from the predecessor node, the processor determines whether the relay apparatus is suitable to relay the data packet. For example, when an RQI value of the relay apparatus is greater than an RQI value of each of at least one of relay candidate nodes in a wireless network, the processor selects the relay apparatus as a relay node to relay the data packet.

In 530, the method determines whether a data packet of a next sequence exists. For example, the relay apparatus determines whether a data packet of a next sequence exists. In an example in which the data packet of the next sequence exists, operations 510 and 520 are repeatedly performed. In another example in which the data packet of the next sequence does not exist, a data transmission procedure is finished, because all data packets are transmitted. As a result, no further data transmission operations are necessary for transmitting the current piece of content or other data.

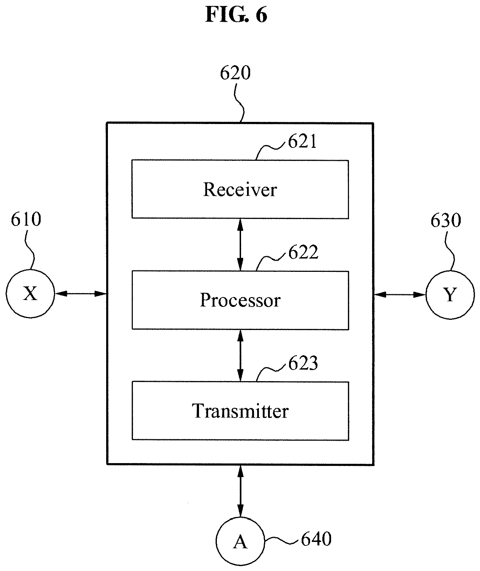

Hereinafter, a method of selecting a relay node based on RQI information will be further described with reference to FIGS. 6 through 8.

FIG. 6 illustrates a relay apparatus 620 configured to relay a packet. As discussed above, such relaying may occur in the context of an ad hoc wireless network. The relay apparatus 620 of FIG. 6 includes a receiver 621, a processor 622, and a transmitter 623. The receiver 621, the processor 622, and the transmitter 623, are components of the relay apparatus 620 that are structurally configured to receive, process, and transmit data relayed by the relay apparatus 620. For example, the relay apparatus 620 receives a data packet from a predecessor node 610, for example a node X as shown in FIG. 6, and relays the data packet to a successor node 630, for example a node Y as shown in FIG. 6, based on RQI information. The relay apparatus 620 relays a data packet, as illustrated in FIGS. 5, and 7A through 9. For example, the RQI information is determined by the processor 622, based on at least one of a probability that a packet is received from the predecessor node 610, and a probability that a packet is transferred to the successor node 630. As noted above, Equation 1 provides one way to calculate such RQI information.

The receiver 621 potentially receives packet information from the predecessor node 610 and the successor node 630. For example, the receiver 621 receives packet information associated with the predecessor node 610 from the predecessor node 610. The packet information associated with the predecessor node 610 includes, for example, a total number of packets transmitted by the predecessor node 610, and a total number of packets received by the relay apparatus 620 from the predecessor node 610.

The receiver 621 also potentially receives a NACK packet from the successor node 630 in a situation in which data loss occurs. The NACK packet includes, for example, a sequence number corresponding to the relayed data packet.

The processor 622 determines whether the relay apparatus 620 is suitable to be selected as a relay node to relay a data packet, based on RQI information, computed based on the packet information. For example, based on a result obtained by comparing the computed RQI information with RQI information included in a data packet, the processor 622 determines whether the relay apparatus 620 is to relay a packet.

For example, the processor 622 determines whether the relay apparatus 620 is to relay a packet, by comparing the computed RQI information with RQI history information. For example, the RQI history information includes RQI information of a data packet received in a previous sequence. As illustrated in FIG. 7A, in an example in which RQI information of a relay apparatus is less than the RQI history information, the relay apparatus determines not to relay a packet of a current sequence. Because the RQI information of the relay apparatus is less than the RQI history information, it indicates that relaying the packet of the current sequence would not be aided by using the relay apparatus to relay the packet. In another, related example, in which the RQI history information is equal to or greater than RQI information of a packet, the relay apparatus maintains the original RQI history information.

In the example of FIG. 6, when a packet is received that has the same sequence number as a packet that has already been received, the processor 622 counts nodes that relay a packet in the current sequence, and updates RQI history information of the relay apparatus 620 appropriately. Additionally, when a node that relays a packet in the previous sequence does not exist, the processor 622 determines whether the relay apparatus 620 is to relay a packet, by comparing the computed RQI information for the relay apparatus 620 with the RQI history information. For example, when a node relaying a packet in the previous sequence does not exist, the processor 622 adjusts the RQI history information, based on an adjustment value and the computed RQI information. In one approach, the RQI history information is adjusted based on the changes to the terms in Equation 1 according to the determination that a packet in the previous sequence does not exist. The RQI history information is used, for example, to determine a node that relay a packet next in a sequence.

In an example in which a packet is received first from the predecessor node 610, the processor 622 reflects the packet information associated with the predecessor node 610 on the computed RQI information in real time. In this example, when the relay apparatus 620 determines that it is to relay a packet, the processor 622 reflects a number of packets to be relayed by the relay apparatus 620 on the computed RQI information in real time.

In another example, in which a NACK packet corresponds to a data packet relayed by the relay apparatus 620 in the previous sequence, the processor 622 considers the NACK packet along with the computed RQI information. In an example, the relay apparatus 620 copes with a change in a link environment and a change in a topology, by updating the RQI information based on packet information every time the relay apparatus 620 participates in receiving and relaying of a packet. For example, when receiving a packet from the predecessor node 610 fails, and when a NACK packet corresponding to a packet relayed by the relay apparatus 620 is received from the successor node 630, the relay apparatus 620 reduces an RQI value of the relay apparatus 620 to indicate that its relaying ability is questionable. When a node with a higher RQI value than the RQI value of the relay apparatus 620 appears, the relay apparatus 620 replaces the relay node by the node with the higher RQI value to facilitate the relaying.

In still another example, the processor 622 adds a weight v to a NACK packet received during a final sequence of a predetermined range of packets, and reflects the received NACK packet on the computed RQI information in real time. When the relay apparatus 620 is selected as a relay node and successfully performs relaying, an RQI value of the relay apparatus 620 is continuously increased as a result. Accordingly, a network environment is rapidly changed. Accordingly, even when it is difficult to use the relay apparatus 620 as a relay node from a predetermined initial point in time, due to a rapid changes and adaptation in the network environment, the relay apparatus 620 continuously attempts to relay a data packet until a node with a higher RQI value appears. Thus, the relay apparatus 620 continues to relay the packet until it has RQI data that indicates that it is acceptable to stop relaying the data packet.

## Equation 2

$$RQI(u)$$

$$= \alpha \left( \frac{Total\ number\ of\ packets\ received\ from\ predecessors}{Total\ umber\ of\ packets\ transmitted\ by\ predecessors} \right)$$

$$\times \beta \left( \frac{X}{Total\ number\ of\ packets\ relayed\ by\ u} \right)$$

Wherein

$$X = (Total\ number\ of\ packets\ relayed\ by\ u - Total\ number\ of\ NACK\ packets\ received\ by\ u$$
$$- v \cdot Total\ number\ of\ NACK\ packets\ received\ by\ u\ during\ last\ k\ times)$$

Accordingly, a number of times that relaying fails during a last sequence of a predetermined range, for example, the last "k" sequences, are measured as shown in Equation 2. The number of times that relaying fails during the last sequence may be, for example, a number of times a NACK packet is received during the last sequence. A weight v may be applied to the NACK packet received during the last sequence, and the information related to the NACK packet may be incorporated into RQI information. Thus, these examples illustrate how it is possible to more quickly adapt to a dynamic change in a communication environment.

For example, the weight v may be randomly set by a user, or chosen by a user based on a heuristic. In an example in which a network environment is only slightly changed, a weight may not be applied. Accordingly, it is possible to prevent a relay node from being frequently replaced. In another example in which the network environment is dynamically changed, a weight is applied and accordingly, a relay node is quickly replaced by using the weight.

The transmitter 623 relays a data packet, until the relay apparatus 620 fails to relay the data packet as discussed above, when the relay apparatus 620 is selected as a relay node. For example, when RQI information of the relay apparatus 620 is equal to or greater than RQI information of a relay candidate node 640 that relays a data packet, the relay apparatus 620 continues to perform relaying because the RQI information indicates that it is an appropriate candidate for the relaying.

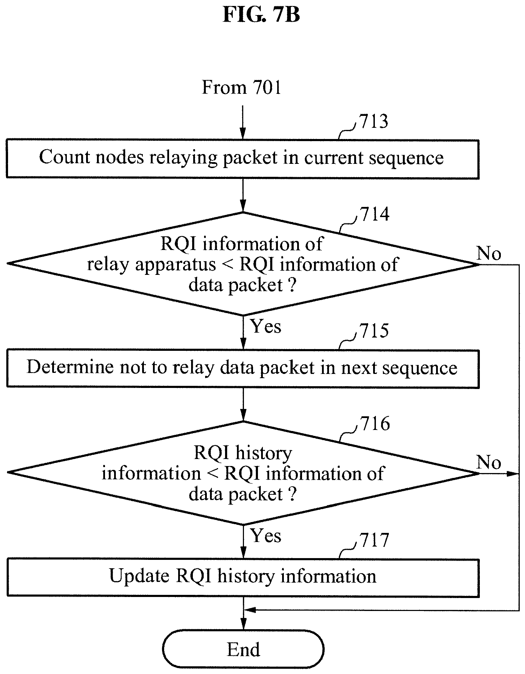

FIGS. 7A and 7B illustrate an example of a method of selecting a relay node based on RQI information. Hereinafter, a process by which a node u, for example a relay apparatus, learns an RQI, and a process of determining whether the relay apparatus is to perform relaying are described. The determining whether the relay apparatus is to perform relaying is based, for example, on the RQI information. For example, the relay apparatus stores and accesses RQI information, and stores and accesses other information associated with relaying. The RQI information includes, for example, an RQI value obtained by using Equation 1, as presented above.

In an example, the information associated with relaying is stored in a numPrevRelay field, a lastHighestRQI field, a relayNext field, a numCurRelay field, a curHighestRQI field, and other similar fields of a data structure used to manage and organize the relaying information. In such an example, the numPrevRelay field indicates a number of nodes that relay a data packet in a previous sequence. The lastHighesRQI field indicates a highest RQI value among RQI values of nodes that relay a packet in the previous sequence. The numCurRelay field indicates a number of nodes that relay a data packet in a current sequence. The curHighestRQI field indicates a highest RQI value among RQI values of nodes that relay a packet in the current sequence. The relayNext field indicates whether a relay apparatus is to relay a packet in the current sequence. The relayNext field is determined in the previous sequence through comparison of RQI history information. However, these fields are presented as examples only, and additional fields may be used in addition to these fields or instead of these fields to manage relaying.

For example, when a data packet is initially received, the relay apparatus determines whether the relay apparatus is to relay a packet that it receives, based on a value of the relayNext field. The relayNext field is set to "true" in a situation in which the relay apparatus is determined to have a highest RQI value among RQI values of neighboring nodes. The relayNext field is determined, for example, by comparing an RQI field value of a data packet p relayed by at least one of a plurality of relay candidate nodes, for example, RQI(p), with RQI information of the relay apparatus itself. By making this comparison, the relay apparatus determines whether it is appropriate for it to relay the packet. Hereinafter, the method of FIG. 7A and 7B is further described.

Referring to FIG. 7A, in 700, the method initializes information associated with relaying of the previous sequence. For example, the relay apparatus initializes information associated with relaying of the previous sequence. In this example, the relay apparatus changes a value of the numPrevRelay field to the same value as that of the numCurRelay field, and changes a value of the lastHighestRQI field to the same value as that of the curHighestRQI field.

In 701, the method determines whether a received data packet corresponds to a packet received first in the current sequence . For example, the relay apparatus determines whether a received data packet corresponds to a packet received first in the current sequence. In this example, the relay apparatus determines whether the data packet is received from a predecessor node. In an example in which a packet corresponding to each sequence is transmitted with a delay of at least a predetermined period of time, a data packet received at a point in time in which the current sequence begins is determined to be a first received packet. The first received data packet is transmitted in this example by the predecessor node. In another example, based on a combination of a seq field and srcAddr field of a data packet received from a source node, the relay apparatus determines whether the data packet is received for the first time, or if a data packet with the same sequence number as an already received data packet is received.

In this example, the relay apparatus receives a packet relayed by at least one of a plurality of relay candidate nodes, but not by the predecessor node, in the current sequence. For example, when a data packet is received from the predecessor node, the relay apparatus can identify that this is the case because it receives a data packet with the same sequence number as the received data packet, or receives a data packet when a predetermined period of time elapses after the predecessor node transmits the data packet.

In an example in which the received data packet is determined to correspond to the packet received first in the current sequence in 701, in 702, the method reflects the packet information associated with the predecessor node on RQI information of the relay apparatus in real time. For example, the relay apparatus reflects the packet information associated with the predecessor node on RQI information of the relay apparatus in real time in 702. The packet information associated with the predecessor node includes, for example, a total number of packets transmitted by the predecessor node, and a total number of packets received by the relay apparatus from the predecessor node. The total number of packets transmitted by the predecessor node corresponds, in an example, to a sequence number recorded in a seq field of a data packet. The total number of packets received by the relay apparatus from the predecessor node is acquired, in an example, every time the relay apparatus successfully receives a data packet from the predecessor node.

In 703, the method determines whether at least one of a plurality of relay candidate nodes relaying a data packet in the previous sequence exists. For example, the relay apparatus determines whether at least one of a plurality of relay candidate nodes relaying a data packet in the previous sequence exists. In this example, the at least one of the plurality of relay candidate nodes is counted every time that a data packet is received from the at least one of the plurality of relay candidate nodes in the previous sequence.

In an example in which the at least one of the plurality of relay candidate nodes does not exist, the method compares the RQI information of the relay apparatus with RQI history information in 704. For example, the relay apparatus compares the RQI information of the relay apparatus with RQI history information in 704. The RQI history information includes, for example, a highest RQI value among RQI values of a data packet received in the previous sequence.

In an example in which the RQI information is less than that of the RQI history information, the method determines not to relay a packet of the current sequence in 705. For example, the relay apparatus determines not to relay a packet of the current sequence in 705. In this example, when an RQI value RQI(u) is less than a value of the lastHighestRQI field, the relay apparatus sets a relayNext field to "false."

In 706, the method determines whether a data packet of the current sequence is to be relayed. For example, the relay apparatus determines whether a data packet of the current sequence is to be relayed. In this example, the relay apparatus determines, using a processor of the relay apparatus, whether the relayNext field is set to "true." Situations in which the relayNext field is set to "true" include, for example, a situation in which the relay apparatus has an RQI value that is equal to or greater than a predetermined value, although no node relays a data packet in the previous sequence, a situation in which there is no relay candidate node with an RQI value greater than an RQI value of the relay apparatus in the previous sequence, and other similar situations in which the RQI values associated with the relay apparatus and other candidate nodes have characteristics indicating that it is appropriate for the relay apparatus to participate in the relaying . As another example, when an RQI value RQI(u) is equal to or greater than a value of the lastHighestRQI field, the relay apparatus sets a relayNext field to "true."

An example situation in which no node relays a data packet in the previous sequence potentially indicates that a number of packets relayed in the previous sequence, for example a value of a numPrevRelay field, is "0." In such a situation, a relay candidate node scheduled to relay a data packet in the previous sequence does not relay the data packet, due to a failure of reception of a packet. In this example, based on RQI history information of the previous sequence, for example the value of the lastHighestRQI field, the relay apparatus maintains a "true" value of the relayNext field, but only when the RQI value RQI(u) of the relay apparatus, for example a node u, is equal to or greater than the value of the lastHighestRQI field.

In 706, the method determines whether a data packet is to be relayed in the current sequence. For example, the relay apparatus determines whether a data packet is to be relayed in the current sequence. When the relayNext field is set to "true," the relay apparatus relays the data packet. For example, when the RQI values of relay candidate nodes in a relay region are compared in 713 through 717 of the previous sequence that are described further below, and when the relay apparatus is determined as a relay candidate node with a highest RQI value, a data packet is determined to be relayed in the current sequence. In an example situation in which the relayNext field is set to "true" in 710, as is described further below, and in which a relay candidate node with a higher RQI value than an RQI value of the relay apparatus exists in 713 through 717 of the previous sequence, the relay apparatus sets the relayNext field to "false."

In an example in which the data packet is determined not to be relayed, in 707, the method initializes RQI history information, and a number of nodes that relay a data packet in the previous sequence. For example, the relay apparatus initializes RQI history information, and a number of nodes that relay a data packet in the previous sequence in 707. In this example, the relay apparatus initializes the numCurRelay field to "0," and initializes the curHighestRQI field that indicates the RQI history information to the greater value of the RQI value of the relay apparatus and RQI history information to which an adjustment value is applied.

In 708, the method reflects a number of packets to be relayed on the RQI information of the relay apparatus in real time. For example, the relay apparatus reflects a number of packets to be relayed on the RQI information of the relay apparatus in real time. In such an example, the relay apparatus computes RQI information, based on a value obtained by incrementing a number of transmitted packets of the relay apparatus by "1," compared to the previous sequence. In another example in which at least one packet is transmitted, the relay apparatus may compute RQI information corresponding to a quantity of the at least one transmitted packet.

In another example in which the data packet is determined to be relayed, in 709, the method relays a packet with updated RQI information. For example, the relay apparatus relays a packet with updated RQI information in 709. In such an example, the relay apparatus updates a relayAddr field and an RQI field of a data packet p with a network address and RQI(u) corresponding to the relay apparatus, and relays the updated data packet P.

In 710, the method initializes information on whether relaying is performed, the number of nodes that relay a packet in the previous sequence, and the RQI history information. For example, relay apparatus initializes information on whether relaying is performed, the number of nodes that relay a packet in the previous sequence, and the RQI history information. In such an example, the relayNext field and the numCurRelay field are initialized to "true" and "0," respectively. The curHighestRQI field has a greater value selected between the RQI value RQI(u) and a value obtained by "lastHighestRQI*$\alpha$," in preparation for a situation in which the relay apparatus fails to receive a continuously relayed packet. In this example, $\alpha$ denotes an adjustment value applied to the lastHighestRQI field. Additionally, $\alpha$ may have a value less than "1," and accordingly is usable as an adjustment amount of an RQI value set based on a situation in which a relay node determined as an optimum node by the previous node fails to receive a packet from a predecessor node.

In 711, the method determines whether a data packet is lost. For example, the relay apparatus determines whether a data packet is lost. In such an example, when whether a packet is to be relayed is determined, the relay apparatus determines whether a data packet of the previous sequence is lost, based on considering sequence number information associated with a currently received data packet. In this example, the sequence number information is based on a seq field.

When the data packet is determined to be lost, in 712 the method transmits a NACK packet. For example, the relay apparatus transmits a NACK packet in 712. In such an example, when the data packet is determined to be lost, the relay apparatus requests the predecessor node to transmit NACK information, informs the predecessor node of a loss of the data packet, and additionally restores the lost data packet.

In another example in which the received data packet does not correspond to the packet received first in the current sequence in 701, in 713, the method counts nodes that relay a packet in the current sequence. This part of the method is illustrated by FIG. 7B. For example, the relay apparatus counts nodes that relay a packet in the current sequence in 713. In such an example, the relay apparatus receives a relayed data packet from at least one of a plurality of relay nodes, after a point in time in which the data packet is transmitted by the predecessor node. For example, the relay apparatus counts such nodes that relay a packet in the current sequence, by incrementing a value of the numCur-

Relay field by "1" every time a data packet of the current sequence is received from the at least one of the plurality of relay candidate nodes.

In 714, the method compares the RQI information of the relay apparatus with RQI information of a data packet. For example, the relay apparatus compares the RQI information of the relay apparatus with RQI information of a data packet. In such an example, the relay apparatus compares the RQI information of the relay apparatus, for example RQI(u), with an RQI value RQI(p) of a data packet p relayed by the at least one of the plurality of relay candidate nodes. In this example, when the RQI information of the relay apparatus is determined to be equal to or greater than the RQI value RQI(p), the relay apparatus maintains a "true" value of the relayNext field.

When the RQI information of the relay apparatus is less than the RQI information of the data packet, in 715 the method determines not to relay the data packet in a next sequence. For example, the relay apparatus determines not to relay the data packet in a next sequence in 715. In such an example, when an RQI value of a packet that is relayed in advance is greater than an RQI value of the relay apparatus, the relay apparatus may set the relayNext field to "false." Because the RQI value of a packet that is relayed in advance is greater, it potentially indicates that the relay apparatus is not an appropriate candidate to relay the packet.

In 716, the method compares RQI history information with the RQI information of the data packet. For example, the relay apparatus compares RQI history information with the RQI information of the data packet. In an example in which the RQI history information is equal to or greater than the RQI information of the data packet, the RQI history information remains unchanged. For example, a value of the curHighestRQI field is maintained to be a value selected in 710.

In an example in which the RQI history information is less than the RQI information of the data packet, in 717 the method updates the RQI history information. For example, the relay apparatus updates the RQI history information in 717. In such an example, every time a data packet is received from the at least one of the plurality of relay candidate nodes, the relay apparatus stores a highest RQI value in the current sequence as RQI history information. Thus, the relay apparatus stores a highest RQI value to update the RQI history information that considers RQI information of the received data packet. In an example in which an RQI value of a data packet is greater than the RQI history information of the relay apparatus, the value of the curHighestRQI field may be changed to the RQI value of the data packet. As described above, by repeating updating of the RQI history information every time a data packet is received, the value of the curHighestRQI field may be changed to a highest RQI value in the current sequence.

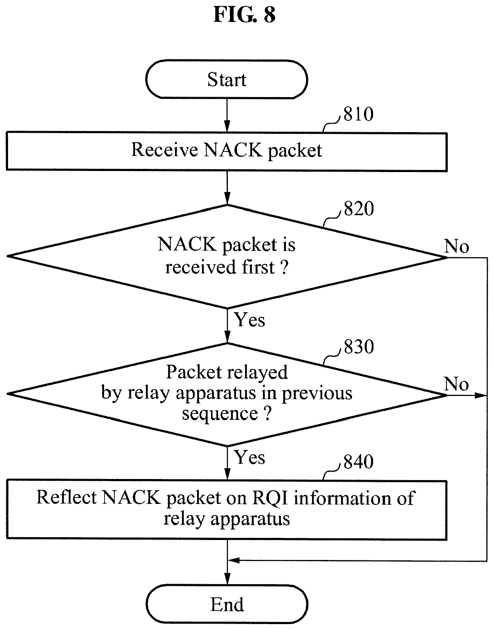

FIG. 8 illustrates an example of an operation of reflecting a NACK packet.

Referring to FIG. 8, in 810, the method receives a NACK packet from a successor node in which data loss occurs. For example, a relay apparatus receives a NACK packet from a successor node in which data loss occurs. The NACK packet includes, for example, a packet transmitted by the at least one of the plurality of relay candidate nodes in 712 of FIG. 7A, or a packet transmitted by a successor node.

In 820, the method determines whether the NACK packet is received first, such as with respect to other NACK packets. For example, relay apparatus determines whether the NACK packet is received first. For example, when NACK packets corresponding to at least two predetermined sequences are received from at least two successor nodes, a NACK packet that is received second is potentially not considered.

In 830, the method determines whether the received NACK packet corresponds to a packet that is relayed by the relay apparatus in the previous sequence. For example, the relay apparatus determines whether the received NACK packet corresponds to a packet that is relayed by the relay apparatus in the previous sequence. In such an example, relay apparatuses receiving NACK packets participate in determining whether the relay apparatuses relay a data packet with a corresponding sequence number. In this example, the relay apparatus records a sequence number of a packet relayed by the relay apparatus, and compares the recorded sequence number with a sequence number of the received NACK packet.

In 840, the method reflects the NACK packet on RQI information of the relay apparatus in real time. For example, the relay apparatus reflects the NACK packet on RQI information of the relay apparatus in real time. In such an example, when the NACK packet corresponds to a data packet that is relayed by the relay apparatus in the previous sequence, the relay apparatus updates a total number of NACK packets received by a node u, in information on a receiving history recorded when the node u performs relaying among RQI information. In this example, NACK packets with the same sequence numbers are received from a plurality of nodes. However, when the NACK packet is reflected on the RQI information only once, the NACK packet is potentially not updated based on a sequence number of operation 820, as operation 820 is potentially not relevant.

In an example, as illustrated in FIGS. 7A through 8, each of relay candidate nodes, for example the node u, updates the RQI value RQI(u) every time a data packet is received from a predecessor node, every time a received data packet is relayed, and every time a NACK packet corresponding to a packet relayed by the node u is received from a successor node. Techniques for updating the RQI value have been presented above. For example, Equation 1 and Equation 2 provide ways in which the RQI value may be updated. For example, the relay apparatus potentially maintains RQI information in a dispersion form as illustrated in FIGS. 7A through 8. In response to an RQI value of the relay apparatus being greater than an RQI value RQI(p) of a relayed data packet p, the relay apparatus relays a data packet of a next sequence.

In this example situation, in which the relay apparatus already participates in relaying and when at least one of the relay candidate nodes with a higher RQI value than the RQI value of the relay apparatus is determined to relay a packet, the relay apparatus does not relay a packet in a next sequence. Thus, even though the relay apparatus previously does some relaying, based on the RQI information the relay apparatus learns that it need not relay in the future. Through the above scheme, each of the relay candidate nodes repeats determining whether each of the relay candidate nodes is to be used as an optimum relay node, and selecting and reselecting each of the relay candidate nodes as being an optimum relay node.

In another example, when a relay apparatus selected as a relay node fails to receive a data packet of an $x^{th}$ sequence from a predecessor node, the relay apparatus fails to relay the data packet. In this example, because no data packet is relayed in the $x^{th}$ sequence, neighboring nodes determine, as relay nodes, to relay a data packet of a next sequence, for example an $(x+1)^{th}$ sequence, in lieu of the relay apparatus that fails to relay the data packet. When a large number of nodes participate in relaying, problems in relaying, for example disorder and collision between packets, and other conflicts, potentially occur. To cope with the problems, using RQI history information, for example a value of the lastHighestRQI field, relaying is enabled only when an RQI value of each of the neighboring nodes is greater than the value of the lastHighestRQI field. Accordingly, only a subset of the neighboring nodes participate in the relaying in the $(x+1)^{th}$ sequence.

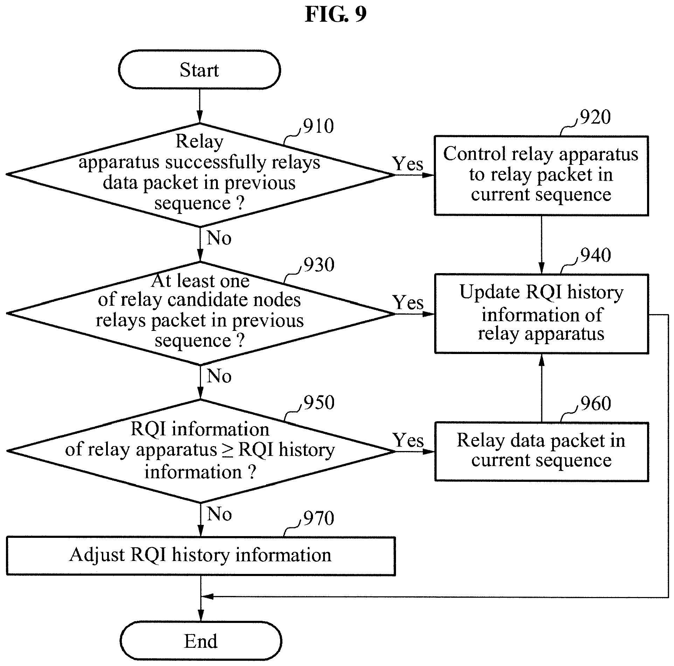

FIG. 9 illustrates another example of a method of selecting a relay node. In this example, a relay apparatus includes RQI information, and information associated with relaying. The RQI information includes, for example, an RQI value obtained by using Equation 1.

In an example, the information associated with relaying is stored in a numPrevRelay field, a lastHighestRQI field, a relayNext field, a numCurRelay field, a curHighestRQI field, and other related fields that store information about the network structure and the relationship between nodes. The numPrevRelay field indicates a number of nodes that relay a data packet in a previous sequence. The lastHighestRQI field indicates a highest RQI value among RQI values of nodes that relay a packet in the previous sequence. The numCurRelay field indicates a number of nodes that relay a data packet in a current sequence. The curHighestRQI field indicates a highest RQI value among RQI values of nodes that relay a packet in the current sequence. The relayNext field indicates whether a relay apparatus is to relay a packet in the current sequence, and is determined in the previous sequence by comparison of RQI information.

In such an example, the relay apparatus determines whether the relay apparatus and at least one of a plurality of relay candidate nodes relay a data packet in a previous sequence, and determines whether the relay apparatus is to relay a data packet in a current sequence, based on RQI information of the relay apparatus and a result of determining whether the data packet is relayed in the previous sequence.

Referring to FIG. 9, in 910, the method determines whether the relay apparatus successfully relays a data packet in the previous sequence . For example, a processor of the relay apparatus determines whether the relay apparatus successfully relays a data packet in the previous sequence. In such an example, the processor determines whether the relay apparatus successfully relays a data packet in the previous sequence. In this example, when the relay apparatus successfully relays the data packet, a packet is continuously relayed. When the relay apparatus fails to relay the data packet, the processor determines whether a data packet is to be relayed in the current sequence.

In such an example, in which the relay apparatus fails to relay the data packet, a successor node fails to receive the data packet from the relay apparatus in the previous sequence as a result of the data packet not being relayed. In this example, the successor node transmits a NACK packet to nodes in a wireless network, to notify the nodes of a failure of receiving of the data packet by the successor node.

In another example, in which an RQI value of each of the at least one of the plurality of relay candidate nodes relaying a data packet in the previous sequence is greater than an RQI value of the relay apparatus, the relay apparatus is determined to fail to relay the data packet, due to the relationship between these RQI values. In this example, the relayNext field of the relay apparatus has a value of "false." The relayNext field is determined through comparison of an RQI field value of a data packet p, for example RQI(p), relayed by the at least one of the plurality of relay candidate nodes and RQI information of the relay apparatus. For example, when the relay apparatus is determined to have a highest RQI value among RQI values of neighboring relay candidate nodes, the relayNext field may be set to "true."

In an example in which the relay apparatus successfully relays the data packet in the previous sequence, in 920, the method controls the relay apparatus to relay a packet in the current sequence using a transmitter of the relay apparatus. For example, the processor controls the relay apparatus to relay a packet in the current sequence using a transmitter of the relay apparatus in 920. In such an example, the relay apparatus continues to perform relaying until an RQI value is less than an RQI value of each of the at least one of the plurality of relay candidate nodes, due to a failure of relaying of a data packet. When the data packet is relayed, in 940, the method updates RQI history information of the relay apparatus . For example, the relay apparatus updates RQI history information of the relay apparatus in 940.

In another example in which the relay apparatus fails to relay the data packet in the previous sequence, in 930 the method determines whether the at least one of the plurality of relay candidate nodes relays the data packet in the previous sequence. For example, the processor determines whether the at least one of the plurality of relay candidate nodes relays the data packet in the previous sequence in 930. In such an example, when a packet relayed by the at least one of the plurality of relay candidate nodes is received through a receiver of the relay apparatus, the relay apparatus determines that the at least one of the plurality of relay candidate nodes relays the packet in the previous sequence.

In an example in which the at least one of the plurality of relay candidate nodes relays the packet in the previous sequence, in 940 the method updates RQI history information of the relay apparatus. For example, the relay apparatus updates RQI history information of the relay apparatus in 940. In such an example, the RQI history information is changed to RQI information included in a data packet that is received in the current sequence and that is transmitted by the at least one of the plurality of relay candidate nodes.

In another example in which the at least one of the plurality of relay candidate nodes does not relay the packet in the previous sequence in 950, the method compares the RQI information of the relay apparatus with the RQI history information, to determine whether relaying is to be performed. For example, the processor compares the RQI information of the relay apparatus with the RQI history information, to determine whether relaying is to be performed. The RQI history information includes, for example, a highest RQI value among RQI values in RQI information received from a relay candidate node in a relay region in the wireless network in the previous sequence.

In an example in which the RQI information of the relay apparatus is equal to or greater than the RQI history information, in 960 the method relays a data packet in the current sequence. For example, the relay apparatus relays a data packet in the current sequence in 960. In such an example, when the data packet is relayed, in 940 the method updates the RQI history information of the relay apparatus. For example, the relay apparatus updates the RQI history information of the relay apparatus in 940.

In another example in which the RQI information of the relay apparatus is less than the RQI history information, in 970 the method adjusts the RQI history information. For example, the relay apparatus adjusts the RQI history information in 970. In such an example, a higher value between the RQI information of the relay apparatus and the RQI history information to which an adjustment value is applied is reflected on the RQI history information.

According to various examples, in a wireless network including a relay apparatus, a node with a highest RQI value is designed to participate in relaying data through the wireless network. In an example, when a first data packet is transmitted, all nodes in a network have the same initial values. In this example, when most of the nodes participate in relaying at once, data packets with the same sequence numbers are transmitted, and accordingly a successor node potentially fail to receive a data packet.

When a data packet is initially transmitted, a number of packets relayed by a relay apparatus, for example a node u, a number of NACK packets received by the relay apparatus from a successor node, and related information are initialized within a predetermined probability range. Accordingly, examples make it possible to prevent most of nodes from participating in relaying at the same time. Additionally, an RQI value of each relay candidate node is updated every time a packet is received, despite a possibility that a node with a low performance as a relay node is selected, and accordingly it is possible to enter a stable state by replacing the node with a low performance by a node with a higher RQI value as a relay node.

Additionally, according to various examples, in a relay apparatus, a number of appropriate relay nodes are designated by a user based on a system environment. As described above with reference to FIGS. 5 through 8, by storing a ranking of RQI values received by each relay candidate node, in an example, the same number of relay nodes as the designated number are selected. Typically, as a number of relay nodes that transmit a data packet without a collision increases, a corresponding reception performance of a successor node increases. Such collisions include, for example, a confusion caused by transmission of data packets with the same sequence numbers. When relay nodes collide with each other, the reception performance of the successor node is reduced because resolving collisions consumes resources. A number of relay nodes suitable for relaying is potentially set by a user, based on a time allowed for relaying, a probability that transmission is enabled without a collision between relay nodes, and other factors that indicate a number of relay nodes that optimizes performance and uses an appropriate amount of resources.

Furthermore, according to various examples, to share content based on a multi-hop broadcast or a multicast of content or other in a wireless ad hoc network, a relay apparatus enhances a throughput, and a packet transmission reliability.

Moreover, according to various examples, a relay apparatus utilize a multi-hop broadcasting technology without a delay time prior to broadcasting, because acquiring of advance information is not a part of examples, which use a dynamically configured wireless network.

The apparatuses and units described herein may be implemented using hardware components. The hardware components may include, for example, controllers, sensors, processors, generators, drivers, and other equivalent electronic components. The hardware components may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The hardware components may run an operating system (OS) and one or more software applications that run on the OS. The hardware components also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, a hardware component may include multiple processors or a processor and a controller. In addition, different processing configurations are possible, such as parallel processors.

The methods described above can be written as a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device that is capable of providing instructions or data to or being interpreted by the processing device. The software also may be distributed over network coupled computer systems so that the software is stored and executed in a distributed fashion. In particular, the software and data may be stored by one or more non-transitory computer readable recording mediums. The media may also include, alone or in combination with the software program instructions, data files, data structures, and the like. The non-transitory computer readable recording medium may include any data storage device that can store data that can be thereafter read by a computer system or processing device. Examples of the non-transitory computer readable recording medium include read-only memory (ROM), random-access memory (RAM), Compact Disc Read-only Memory (CD-ROMs), magnetic tapes, USBs, floppy disks, hard disks, optical recording media (e.g., CD-ROMs, or DVDs), and PC interfaces (e.g., PCI, PCI-express, WiFi, etc.). In addition, functional programs, codes, and code segments for accomplishing the example disclosed herein can be construed by programmers skilled in the art based on the flow diagrams and block diagrams of the figures and their corresponding descriptions as provided herein.

As a non-exhaustive illustration only, a terminal/device/unit described herein may refer to mobile devices such as, for example, a cellular phone, a smart phone, a wearable smart device (such as, for example, a ring, a watch, a pair of glasses, a bracelet, an ankle bracket, a belt, a necklace, an earring, a headband, a helmet, a device embedded in the cloths or the like), a personal computer (PC), a tablet personal computer (tablet), a phablet, a personal digital assistant (PDA), a digital camera, a portable game console, an MP3 player, a portable/personal multimedia player (PMP), a handheld e-book, an ultra mobile personal computer (UMPC), a portable lab-top PC, a global positioning system (GPS) navigation, and devices such as a high definition television (HDTV), an optical disc player, a DVD player, a Blu-ray player, a setup box, or any other device capable of wireless communication or network communication consistent with that disclosed herein. In a non-exhaustive example, the wearable device may be self-mountable on the body of the user, such as, for example, the glasses or the bracelet. In another non-exhaustive example, the wearable device may be mounted on the body of the user through an attaching device, such as, for example, attaching a smart phone or a tablet to the arm of a user using an armband, or hanging the wearable device around the neck of a user using a lanyard.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims.

## Claims

1. A method for selecting whether a relay apparatus (620) is to perform relaying among a plurality of relay candidate nodes (121-125), said method being performed by the relay apparatus, said method comprising:

   receiving a relayed data packet of a current sequence of data packets from a relay candidate node of the plurality of relay candidate nodes, wherein the relayed data packet includes a relay quality indicator, RQI, value of the relay candidate node that relayed the relayed data packet;
   determining whether the relay apparatus is appropriate for relaying the relayed data packet by comparing the RQI value of the relay candidate node with an RQI value of the relay apparatus,
   wherein, if the RQI value of the relay apparatus is equal to or is greater than the RQI value of the relay candidate node, the relay apparatus is appropriate for relaying the relayed data packet, and
   wherein, if the RQI value of the relay apparatus is less than the RQI value of relay candidate node, the relay apparatus is not an appropriate candidate for relaying the relayed data packet.

**2.** The method of claim 1, wherein the determining further comprises counting (713) nodes that relay a packet in a current sequence by incrementing a value of a field, which indicates a number of nodes that relay a data packet in the current sequence, by 1 every time the data packet of the current sequence is received from at least one of the plurality of relay candidate nodes.

**3.** The method of one of claims 1 or 2, further comprising:
in response to a value of a field, which indicates a number of nodes that relay a data packet in a previous sequence, being 0, determining whether the relay apparatus is to relay a data packet, by comparing the RQI value of the relay apparatus with a field indicating the highest RQI value among RQI values of nodes that relay a data packet in the previous sequence, wherein the relay apparatus is appropriate for relaying, if it is determined that the relay apparatus has the highest RQI value.

**4.** The method of one of claims 1 to 3, further comprising:
in response to a value of a field, which indicates a number of nodes that relay a data packet in a previous sequence, being 0, adjusting a field indicating a highest RQI value among RQI values of nodes that relay a data packet in a current sequence of data packets based on an adjustment value and the RQI value of the relay apparatus.

**5.** A relay apparatus (620) for selecting whether to perform relaying among a plurality of relay candidate nodes, the relay apparatus, comprising:

a receiver (621) configured to receive a relayed data packet of a current sequence of data packets from a relay candidate node of the plurality of relay candidate nodes, wherein the relayed data packet includes a relay quality indicator, RQI, value of the relay candidate node that relayed the relayed data packet; and
a processor (622) configured to determine whether the relay apparatus is appropriate for relaying the relayed data packet by comparing the RQI value of the relay candidate node with an RQI value of the relay apparatus, wherein, if the RQI value of the relay apparatus is equal to or is greater than the RQI value of the relay candidate node, the relay apparatus is appropriate for relaying the relayed data packet, and
wherein, if the RQI value of the relay apparatus is less than the RQI value of relay candidate node, the relay apparatus is not an appropriate candidate for relaying the relayed data packet.

**6.** A computer-readable medium having instruction for selecting whether a relay apparatus is to perform relaying among a plurality of relay candidate nodes, when performed by a processor (622) of the relay apparatus, cause the processor to perform the steps of:

receiving a relayed data packet of a current sequence of data packets from a relay candidate node of the plurality of relay candidate nodes, wherein the relayed data packet includes a relay quality indicator, RQI, value of the relay candidate node that relayed the relayed data packet;
determining whether the relay apparatus is appropriate for relaying the relayed data packet by comparing the RQI value of the relay candidate node with an RQI value of the relay apparatus,
wherein, if the RQI value of the relay apparatus is equal to or is greater than the RQI value of the relay candidate node, the relay apparatus is appropriate for relaying the relayed data packet, and
wherein, if the RQI value of the relay apparatus is less than the RQI value of relay candidate node, the relay apparatus is not an appropriate candidate for relaying the relayed data packet.

**Patentansprüche**

**1.** Verfahren zum Wählen, ob eine Weitergabevorrichtung (620) eine Weitergabe zwischen einer Vielzahl von Weitergabekandidaten-Knoten (121-125) durchführen soll, wobei das Verfahren von der Weitergabevorrichtung durchgeführt wird, wobei das Verfahren umfasst:

Empfangen eines weitergegebenen Datenpakets einer aktuellen Sequenz von Datenpaketen von einem Weitergabekandidaten-Knoten der Vielzahl von Weitergabekandidaten-Knoten, wobei das weitergegebene Datenpaket einen Relay-Quality-Indicator-(RQI-)Wert des Weitergabekandidaten-Knoten umfasst, der das weitergegebene Datenpaket weitergegeben hat;
Bestimmen, ob die Weitergabevorrichtung zum Weitergeben des weitergegebenen Datenpakets geeignet ist, durch Vergleichen des RQI-Werts des Weitergabekandidaten-Knoten mit einem RQI-Wert der Weitergabevorrichtung,

wobei, wenn der RQI-Wert der Weitergabevorrichtung größer gleich dem RQI-Wert des Weitergabekandidaten-Knoten ist, die Weitergabevorrichtung zum Weitergeben des weitergegebenen Datenpakets geeignet ist, und wobei, wenn der RQI-Wert der Weitergabevorrichtung kleiner ist als der RQI-Wert des Weitergabekandidaten-Knoten ist, die Weitergabevorrichtung kein geeigneter Kandidat zum Weitergeben des weitergegebenen Datenpakets ist.

2. Verfahren nach Anspruch 1, wobei das Bestimmen ferner das Zählen (713) von Knoten, die ein Paket in einer aktuellen Sequenz weitergeben, durch Hochzählen eines Werts eines Felds, das eine Zahl von Knoten angibt, die ein Datenpaket in der aktuellen weitergeben, um 1 jedes Mal, wenn das Datenpaket der aktuellen Sequenz von wenigstens einem der Vielzahl von Weitergabekandidaten-Knoten empfangen wird, umfasst.

3. Verfahren nach Anspruch 1 oder 2, ferner umfassend:
als Reaktion auf einen Wert eines Felds, das eine Zahl von Knoten angibt, die ein Datenpaket in einer vorhergehenden Sequenz weitergeben, gleich 0 Bestimmen, ob die Weitergabevorrichtung ein Datenpaket weitergeben soll, durch Vergleichen des RQI-Werts der Weitergabevorrichtung mit einem Feld zur Angabe des höchsten RQI-Werts von RQI-Werten von Knoten, die ein Datenpaket in der vorhergehenden Sequenz weitergeben, wobei die Weitergabevorrichtung zum Weitergeben geeignet ist, wenn bestimmt wird, dass die Weitergabevorrichtung den höchsten RQI-Wert aufweist.

4. Verfahren nach einem der Ansprüche 1 bis 3, ferner umfassend:
als Reaktion auf einen Wert eines Felds, das eine Zahl von Knoten angibt, die ein Datenpaket in einer vorhergehenden Sequenz weitergeben, gleich 0 Anpassen eines Felds zur Angabe eines höchsten RQI-Werts von RQI-Werten von Knoten, die ein Datenpaket in einer aktuellen Sequenz von Datenpaketen weitergeben, auf der Basis eines Anpassungswerts und des RQI-Werts der Weitergabevorrichtung.

5. Weitergabevorrichtung (620) zum Wählen, ob eine Weitergabe zwischen einer Vielzahl von Weitergabekandidaten-Knoten erfolgen soll, wobei die Weitergabevorrichtung umfasst:

einen zum Empfangen eines weitergegebenen Datenpakets einer aktuellen Sequenz von Datenpaketen von einem Weitergabekandidaten-Knoten der Vielzahl von Weitergabekandidaten-Knoten, wobei das weitergegebene Datenpaket einen Relay-Quality-Indicator-(RQI-)Wert des Weitergabekandidaten-Knoten umfasst, der das weitergegebene Datenpaket weitergegeben hat, ausgebildeten Empfänger (621); und
einen zum Bestimmen, ob die Weitergabevorrichtung zum Weitergeben des weitergegebenen Datenpakets geeignet ist, durch Vergleichen des RQI-Werts des Weitergabekandidaten-Knoten mit einem RQI-Wert der Weitergabevorrichtung, ausgebildeten Prozessor (622), wobei, wenn der RQI-Wert der Weitergabevorrichtung größer gleich dem RQI-Wert des Weitergabekandidaten-Knoten ist, die Weitergabevorrichtung zum Weitergeben des weitergegebenen Datenpakets geeignet ist, und
wobei, wenn der RQI-Wert der Weitergabevorrichtung kleiner ist als der RQI-Wert des Weitergabekandidaten-Knoten ist, die Weitergabevorrichtung kein geeigneter Kandidat zum Weitergeben des weitergegebenen Datenpakets ist.

6. Computerlesbares Medium mit einer Anweisung zum Wählen, ob eine Weitergabevorrichtung eine Weitergabe zwischen einer Vielzahl von Weitergabekandidaten-Knoten durchführen soll, die bei Ausführen durch einen Prozessor (622) der Weitergabevorrichtung den Prozessor zum Ausführen der Schritte veranlasst zum:

Empfangen eines weitergegebenen Datenpakets einer aktuellen Sequenz von Datenpaketen von einem Weitergabekandidaten-Knoten der Vielzahl von Weitergabekandidaten-Knoten, wobei das weitergegebene Datenpaket einen Relay-Quality-Indicator-(RQI-)Wert des Weitergabekandidaten-Knoten umfasst, der das weitergegebene Datenpaket weitergegeben hat;
Bestimmen, ob die Weitergabevorrichtung zum Weitergeben des weitergegebenen Datenpakets geeignet ist, durch Vergleichen des RQI-Werts des Weitergabekandidaten-Knoten mit einem RQI-Wert der Weitergabevorrichtung,
wobei, wenn der RQI-Wert der Weitergabevorrichtung größer gleich dem RQI-Wert des Weitergabekandidaten-Knoten ist, die Weitergabevorrichtung zum Weitergeben des weitergegebenen Datenpakets geeignet ist, und
wobei, wenn der RQI-Wert der Weitergabevorrichtung kleiner ist als der RQI-Wert des Weitergabekandidaten-Knoten ist, die Weitergabevorrichtung kein geeigneter Kandidat zum Weitergeben des weitergegebenen Datenpakets ist.

**Revendications**

1. Procédé pour sélectionner si un appareil de relais (620) doit ou non effectuer un relais parmi une pluralité de noeuds candidats de relais (121-125), ledit procédé étant effectué par l'appareil de relais, ledit procédé comprenant les étapes consistant à :

   recevoir un paquet de données relayé d'une séquence actuelle de paquets de données provenant d'un noeud candidat de relais de la pluralité de noeuds candidats de relais, le paquet de données relayé comprenant une valeur d'indicateur de qualité de relais, RQI, du noeud candidat de relais ayant relayé le paquet de données relayé ;
   déterminer si l'appareil de relais est approprié pour relayer le paquet de données relayé en comparant la valeur RQI du noeud candidat de relais à une valeur RQI de l'appareil de relais,
   dans lequel, si la valeur RQI de l'appareil de relais est égale ou supérieure à la valeur RQI du noeud candidat de relais, l'appareil de relais est approprié pour relayer le paquet de données relayé, et
   dans lequel, si la valeur RQI de l'appareil de relais est inférieure à la valeur RQI du noeud candidat de relais, l'appareil de relais n'est pas un candidat approprié pour relayer le paquet de données relayé.

2. Procédé selon la revendication 1, dans lequel la détermination comprend en outre le comptage (713) de noeuds qui relayent un paquet dans une séquence actuelle en incrémentant une valeur d'un champ, qui indique un nombre de noeuds qui relayent un paquet de données dans la séquence actuelle, de 1 à chaque fois que le paquet de données de la séquence actuelle est reçu depuis au moins un de la pluralité de noeuds candidats de relais.

3. Procédé selon l'une des revendications 1 ou 2, comprenant en outre :
   en réponse à une valeur d'un champ, qui indique un nombre de noeuds qui relayent un paquet de données dans une séquence précédente, égale à 0, déterminer si l'appareil de relais doit relayer un paquet de données, en comparant la valeur RQI de l'appareil de relais à un champ indiquant la valeur RQI la plus élevée parmi les valeurs RQI de noeuds qui relayent un paquet de données dans la séquence précédente, l'appareil de relais étant approprié pour un relais, s'il est déterminé que l'appareil de relais possède la valeur RQI la plus élevée.

4. Procédé selon l'une des revendications 1 à 3, comprenant en outre :
   en réponse à une valeur d'un champ, qui indique un nombre de noeuds qui relayent un paquet de données dans une séquence précédente, égale à 0, ajuster un champ indiquant une valeur RQI la plus élevée parmi les valeurs RQI de noeuds qui relayent un paquet de données dans une séquence actuelle de paquets de données sur la base d'une valeur d'ajustement et de la valeur RQI de l'appareil de relais.

5. Appareil de relais (620) pour sélectionner s'il faut effectuer un relais parmi une pluralité de noeuds candidats de relais, l'appareil de relais, comprenant :

   un récepteur (621) configuré pour recevoir un paquet de données relayé d'une séquence actuelle de paquets de données provenant d'un noeud candidat de relais de la pluralité de noeuds candidats de relais, le paquet de données relayé comprenant une valeur d'indicateur de qualité de relais, RQI, du noeud candidat de relais qui a relayé le paquet de données relayé ; et
   un processeur (622) configuré pour déterminer si l'appareil de relais est approprié pour relayer le paquet de données relayé en comparant la valeur RQI du noeud candidat de relais à une valeur RQI de l'appareil de relais,
   dans lequel, si la valeur RQI de l'appareil de relais est égale ou supérieure à la valeur RQI du noeud candidat de relais, l'appareil de relais est approprié pour relayer le paquet de données relayé, et
   dans lequel, si la valeur RQI de l'appareil de relais est inférieure à la valeur RQI du noeud candidat de relais, l'appareil de relais n'est pas un candidat approprié pour relayer le paquet de données relayé.

6. Support lisible par ordinateur ayant une instruction pour choisir si un appareil de relais doit effectuer un relais parmi une pluralité de noeuds candidats de relais, lorsqu'elle est exécutée par un processeur (622) de l'appareil relais, amène le processeur à exécuter les étapes consistant à :

   recevoir un paquet de données relayé d'une séquence actuelle de paquets de données provenant d'un noeud candidat de relais de la pluralité de noeuds candidats de relais, le paquet de données relayé comprenant une valeur d'indicateur de qualité de relais, RQI, du noeud candidat de relais qui a relayé le paquet de données relayé ;
   déterminer si l'appareil de relais est approprié pour relayer le paquet de données relayé en comparant la valeur RQI du noeud candidat de relais à une valeur RQI de l'appareil de relais,

dans lequel, si la valeur RQI de l'appareil de relais est égale ou supérieure à la valeur RQI du noeud candidat de relais, l'appareil de relais est approprié pour relayer le paquet de données relayé, et

dans lequel, si la valeur RQI de l'appareil de relais est inférieure à la valeur RQI du noeud candidat de relais, l'appareil de relais n'est pas un candidat approprié pour relayer le paquet de données relayé.

## FIG. 1

## FIG. 2

220

Reception probability →　( u )　→ Transmission probability

229

**FIG. 3**

<u>300</u>

| msgType | seq | srcAddr | relayAddr | RQI |
|---------|-----|---------|-----------|-----|
| data ||||| 

310 · 320 · 330 · 340 · 350

# FIG. 4

400

410 420

| msgType | seq |
|---------|-----|

## FIG. 5

```
                    ┌──────────────┐
                    │    Start     │
                    └──────┬───────┘
                           │
    ┌──────────────────────▼──────────────────────────┐
    │  Receive packet information from predecessor node │───510
    │              and successor node                   │
    └──────────────────────┬──────────────────────────┘
                           │
    ┌──────────────────────▼──────────────────────────┐
    │ Determine whether relay apparatus is to be selected as│───520
    │       relay node, based on RQI information        │
    └──────────────────────┬──────────────────────────┘
                           │
Yes            ◇ Data packet of next ◇───530
    ┌──────────  sequence exists ?
    │              │ No
    │       ┌──────▼───────┐
    │       │     End      │
    │       └──────────────┘
```

Receive packet information from predecessor node and successor node — 510

Determine whether relay apparatus is to be selected as relay node, based on RQI information — 520

Data packet of next sequence exists ? — 530

Yes

No

End

**FIG. 6**

# FIG. 7A

Start

Initialize information associated with
relaying of previous sequence ~700

Packet
received first in current
sequence ? 701 — No → To 713

Yes 702

Reflect packet information associated with
predecessor node on RQI information of
relay apparatus

At least one
of relay candidate nodes
relaying data packet in previous
sequence exists ? 703 — Yes

No

RQI
information of relay
apparatus ≥ RQI history
information ? 704 — No → Determine not to relay
packet of current
sequence 705

Yes

Data packet of current
sequence is to be relayed ? 706 — No → Initialize RQI history
information, and
number of nodes relying
data packet in
previous sequence 707

Yes

Reflect number of packets to be relayed on
RQI information of relay apparatus 708

Relay packet with updated RQI information ~709

Initialize information on whether relaying is
performed, number of nodes relaying packet in
previous sequence, and RQI history information ~710

Data packet is lost ? 711 — No →

Yes

Transmit NACK packet ~712

End

## FIG. 7B

From 701

/713

Count nodes relaying packet in current sequence

/714

RQI information of
relay apparatus < RQI information of
data packet ?

No

Yes /715

Determine not to relay data packet in next sequence

/716

RQI history
information < RQI information of
data packet ?

No

Yes /717

Update RQI history information

End

**FIG. 8**

## FIG. 9

Start

910 Relay apparatus successfully relays data packet in previous sequence ?

Yes → 920 Control relay apparatus to relay packet in current sequence

No ↓

930 At least one of relay candidate nodes relays packet in previous sequence ?

Yes → 940 Update RQI history information of relay apparatus

No ↓

950 RQI information of relay apparatus ≥ RQI history information ?

Yes → 960 Relay data packet in current sequence

No ↓

970 Adjust RQI history information

End

**REFERENCES CITED IN THE DESCRIPTION**

**Patent documents cited in the description**

- WO 2011083389 A1
- WO 2005062553 A1
- US 2007206547 A1